# FASCICULE DE BREVET EUROPEEN

(11) **EP 3 870 809 B1**
(45) Date de publication et mention de la délivrance du brevet: **22.07.2026**
(21) Numéro de dépôt: 19806022.0
(22) Date de dépôt: 16.10.2019
(51) Int. Cl.: F01D 15/10, F02K 3/06, H02K 21/14

(54) **MODULE ELECTRIQUE DE SOUFFLANTE D'AERONEF COMPORTANT DES AUBES A FIXATION PERFECTIONNEE**
ELEKTRISCHE BAUGRUPPE EINES GEBLÄSES EINES LUFTFAHRZEUGES MIT EINER ANGEPASSTEN SCHAUFELANBINDUNG
ELECTRIC MODULE OF AN AIRCRAFT FAN WITH ADAPTATIVE BLADE CONNECTION

(30) Priorité: 26.10.2018 FR 1859936
(43) Date de publication de la demande: 01.09.2021
(73) Titulaire: SAFRAN AIRCRAFT ENGINES, 75015 Paris (FR)
(72) Inventeur: MILLIER, Vincent, François, Georges, 77550 MOISSY-CRAMAYEL (FR); CHARIER, Gilles, Alain, Marie, 77550 MOISSY-CRAMAYEL (FR); FRANTZ, Caroline, Marie, 77550 MOISSY-CRAMAYEL (FR); GUILLOTEL, Loïc, Paul, Yves, 77550 MOISSY-CRAMAYEL (FR)
(74) Mandataire: Gevers & Orès
(86) Numéro de dépôt international: PCT/FR2019/052444
(87) Numéro de publication internationale: WO 2020/084221

(56) Documents cités:
- CN-A- 106 516 127
- DE-A1- 102015 214 255
- GB-A- 2 360 752
- US-A1- 2016 363 050
- US-B2- 7 798 778

## Description

L'invention concerne un module électrique de soufflante moteur d'aéronef comportant une machine électrique.

L'invention concerne plus particulièrement un module électrique de soufflante d'aéronef comportant une soufflante munie d'aubes, mobile en rotation à l'intérieur d'un carter, et une machine électrique comportant un rotor solidaire de la soufflante et un stator intégré audit carter.

Selon sa configuration, un module électrique de soufflante est à même de remplir plusieurs fonctions.

Un module électrique de soufflante peut produire de l'électricité et fournir une poussée et être alimenté en énergie mécanique par une turbine. Dans ce cas, il fait partie d'un turboréacteur.

Un module électrique de soufflante peut consommer de l'électricité pour produire une poussée. Il peut de plus être alimenté par une turbine. Il peut être indépendant d'un turboréacteur et alimenté uniquement électriquement, ou en variante, faire partie d'un turboréacteur avec une alimentation électrique externe.

Un module électrique de soufflante peut aussi produire de l'électricité en fonctionnant en éolienne. Le propulseur peut être indépendant d'un turboréacteur ou faire partie d'un turboréacteur. Dans ce dernier cas, la turbine du turboréacteur est non fonctionnelle pendant ce mode de fonctionnement.

L'invention concerne un module électrique de soufflante défini selon les termes ci-dessus. Dans ce cas, le module électrique de soufflante est un élément d'un turboréacteur entrainé par une turbine de ce turboréacteur, préférentiellement une turbine basse pression d'un corps basse pression de celui-ci.

### ETAT DE LA TECHNIQUE ANTERIEURE

Un moteur conventionnel destiné à motoriser un aéronef commercial est généralement un turboréacteur à double corps ou triple corps qui comprend un corps haute pression comportant un compresseur haute pression et une turbine haute pression, un corps basse pression comportant un compresseur basse pression et une turbine basse pression et entraînant la soufflante, et éventuellement un corps à pression intermédiaire comportant un compresseur à pression intermédiaire et une turbine à pression intermédiaire, logés dans une nacelle du turboréacteur.

La puissance fournie par un tel turboréacteur est généralement destinée à assurer la propulsion de l'aéronef mais aussi à assurer la production de courant électrique destinée à assurer différentes fonctions embarquées de l'aéronef comme, de manière non exhaustive, l'alimentation des commandes de vol, l'antigivrage des ailes, l'alimentation du système de conditionnement d'air cabine, l'éclairage de la cabine, ou encore l'alimentation du poste de pilotage de l'aéronef.

Conventionnellement, un turboréacteur comporte une boîte d'engrenages ou AGB (acronyme anglo-saxon de Accessory Gear Box) qui est disposée à l'extérieur du turboréacteur, qui est reliée mécaniquement par un arbre secondaire radial au corps haute pression, et qui comporte un générateur utilisé pour transformer une partie de la puissance mécanique délivrée par le turboréacteur en puissance électrique, et un démarreur permettant le démarrage de la turbomachine.

La tendance actuelle vise à augmenter la part des équipements électriques embarqués, réputés plus souples d'emploi au niveau de l'aéronef que des équipements purement mécaniques, par exemple pour assurer, en plus des équipements précédemment cités, l'entraînement de compresseurs destinés à assurer la pressurisation de la cabine de l'aéronef. Les besoins en puissance électrique pouvant être fournie par le turboréacteur vont donc croissant et ne peuvent plus être assurés par des générateurs électriques conventionnels sans entraîner une augmentation globale du poids du turboréacteur et une dégradation des performances globales.

Il existe donc un réel intérêt pour des machines électriques pouvant assurer des fonctions de générateur supplémentaire permettant de fournir une puissance électrique additionnelle. Les machines électriques réversibles assurent cette fonction de générateur, mais elles assurent aussi des fonctions de démarreur, et à ce titre de telles machines assurent un gain de poids évident.

Suivant un mode de réalisation connu de la demande internationale WO-2007/036.202, une machine électrique, fonctionnant de manière réversible et cumulant à ce titre les fonctions de générateur et de démarreur, peut être agencée à l'intérieur même du turboréacteur, plus précisément dans le corps haute pression.

Dans ce document, lors du démarrage du turboréacteur on commence par mettre le corps haute pression en rotation, à l'aide du générateur électrique utilisé comme moteur électrique. Le compresseur haute pression alimente alors la chambre de combustion en air sous pression, ce qui permet à la combustion de s'établir, et à l'étage haute pression du turboréacteur de démarrer. La turbine basse pression est alors entraînée en rotation par le flux d'air primaire sortant, entrainant ainsi le corps basse pression et la soufflante. Le turboréacteur est alors démarré, et l'on coupe l'alimentation du démarreur électrique qui arrête de fonctionner comme moteur d'entrainement du compresseur haute pression.

L'agencement du générateur électrique au niveau du corps haute pression présente comme avantage principal le fait que ce générateur peut d'une part être utilisé comme moteur électrique pour le démarrage du turboréacteur, et d'autre part peut être utilisé comme générateur électrique pour fournir du courant au reste de l'aéronef.

Cette machine électrique ne constitue pas un générateur additionnel, car elle remplace les générateur et démarreur précédemment connus de l'état de la technique, mais elle ne permet pas d'apporter de gain significatif de puissance électrique à l'aéronef.

De plus, cette disposition présente l'inconvénient de présenter un mauvais rendement global de la conversion de puissance mécanique en puissance électrique. En effet, la surconsommation de carburant nécessaire pour fournir une puissance électrique donnée est supérieure lorsque le générateur électrique prélève de la puissance dans le corps haute pression par rapport à ce qu'elle peut être lorsqu'il prélève de la puissance sur le corps basse pression.

L'agencement d'un générateur électrique au niveau du corps haute pression pose également de nombreux problèmes d'encombrement et d'accessibilité.

De plus, la mise en place d'un générateur électrique tirant sa puissance du corps haute pression peut poser un problème d'opérabilité pour le turboréacteur, car un prélèvement de puissance mécanique trop élevé est susceptible de provoquer le pompage du compresseur HP, en particulier quand le moteur fonctionne à bas régime.

Enfin, cette conception ne permet pas d'assistance de la soufflante par la machine électrique, ni d'envisager un entraînement purement électrique de la soufflante par la seule machine électrique dans le cadre d'un moteur d'aéronef dépourvu de turbomachine et entièrement électrique.

Pour remédier à ces inconvénients, on a proposé dans le document EP-2.048.329 un turboréacteur comportant un module de soufflante électrique. Ce turboréacteur comporte un corps haute pression et un corps basse pression entraînant une soufflante disposée dans un carter fixe, et un générateur électrique agencé dans la soufflante prélevant une puissance sur celle-ci, le générateur comportant un rotor intégré à la soufflante, et un stator intégré au carter de soufflante. Dans ce document, le rotor comporte des aimants permanents qui sont intégrés à l'extrémité des aubes de soufflante.

Cette solution permet de disposer d'une place importante pour la machine électrique. Le carter de soufflante qui est lié à la nacelle est suffisamment large pour abriter les bobinages permettant la production de courant électrique et des harnais électriques permettant l'acheminement de ce courant vers un pylône supportant le turboréacteur. La mise en place et la maintenance du générateur électrique ne sont donc pas ou peu perturbées par des problèmes d'encombrement.

En outre, la zone de la soufflante, zone délimitée par le carter de soufflante et les capots de la nacelle qui l'entoure, est une zone froide, relativement aux autres parties de la turbomachine, de température typiquement inférieure à 70°C. Ce positionnement permet de minimiser les contraintes de refroidissement.

Les aimants permanents de la machine électrique ne nécessitent ainsi pas de moyens de refroidissement additionnels complexes car la température au sein de la soufflante n'atteint jamais la température de Curie, au-delà de laquelle ils perdraient leurs propriétés magnétiques.

De la même façon, les bobinages de la machine électrique étant placés dans la même zone froide du turboréacteur, ils ne nécessitent pas de moyens de refroidissement additionnels complexes tels que des systèmes de refroidissement liquide mais peuvent être simplement refroidis par l'air.

Les moyens de refroidissement peuvent donc avoir un encombrement et une masse réduits.

En outre, du fait de la dimension importante de la soufflante, il est possible de disposer d'une machine fonctionnant en générateur électrique de relativement grande puissance, apte à alimenter en courant simultanément différents équipements électriques de l'aéronef sur lequel est monté le turboréacteur.

Cette possibilité a d'autant plus d'importance que le nombre d'équipements électriques embarqués sur les aéronefs va croissant.

Une turbomachine ainsi équipée permet en outre notamment, en évitant de prélever de la puissance de manière excessive sur le corps haute pression, d'éviter les phénomènes de pompage et donc les problèmes d'instabilité et d'opérabilité du turboréacteur à bas régime.

Dans cette conception et jusqu'à présent, les aimants permanents ont été directement intégrés dans les aubes ou rapportés sous la forme de talons fixés à l'extrémité des aubes.

Dans ces deux conceptions connues, une masse est ajoutée en bout de chaque aube, et de ce fait les aubes sont soumises à une force centrifuge plus importante que des aubes conventionnelles. Cette force centrifuge peut entraîner des phénomènes d'élongation radiale des aubes et être incompatible avec le maintien à tous les régimes de rotation d'un jeu fonctionnel adéquat entre les aubes de la soufflante et son carter.

En outre, l'augmentation globale de la masse de chaque aube, par rapport à une aube conventionnelle, implique comme on l'a vu une augmentation des forces centrifuges s'exerçant sur les aubes. De ce fait ces aubes nécessitent pour leur maintien dans la soufflante l'utilisation d'un moyeu ou disque de soufflante de taille supérieure.

Enfin, en cas de perte d'une telle aube, l'énergie cinétique libérée par cette aube est plus importante que celle libérée par une aube conventionnelle dans le même cas. Il s'ensuit que l'utilisation d'une telle aube nécessite de disposer d'un carter de soufflante plus massif, apte à supporter l'éjection d'une telle aube sans risque d'être traversé par celle-ci. Une telle contrainte dimensionnelle pénalise largement la masse du moteur.

Cette conception ne permet pas non plus d'envisager un entraînement purement électrique de la soufflante par la seule machine électrique dans la cadre d'un moteur d'aéronef entièrement électrique.

Il n'est par ailleurs pas possible d'envisager un montage rigide des aubes à chacune de leurs extrémités comme cela est décrit dans les documents CN-106.516.127-A, US-2016/363.050-A1 et GB-2.360.752-A.

### EXPOSÉ DE L'INVENTION

L'invention remédie à ces inconvénients en proposant un moteur comportant une machine électrique de forme annulaire agencée autour de la soufflante, dont le rotor est conformé en anneau.

Plus particulièrement, l'invention propose un module électrique de soufflante d'aéronef d'axe A tel que décrit dans la revendication indépendante 1.

Un tel module électrique de soufflante est particulièrement approprié à sa mise en œuvre dans une architecture de turbomachine de type UHBR ID, acronyme anglo-saxon de "Ultra High By Pass Ratio, Integral Drive", qui correspond à une configuration de moteur comportant une turbomachine à soufflante carénée à très haut taux de dilution, ledit moteur comprenant un réducteur relié au corps BP, dont le but est de pouvoir optimiser indépendamment les vitesses de rotation de la soufflante et de la turbine BP et qui comprend une ou plusieurs machines électriques sur les parties HP et BP de la turbomachine ayant des puissances de quelques kW à plusieurs MW.

Selon d'autres caractéristiques de l'invention :
- l'anneau comporte une paroi annulaire qui s'étend au niveau des extrémités radialement externes des aubes et qui comprend des fentes traversées par ces extrémités radialement externes, chaque fente ayant une forme complémentaire à celle du profil de l'extrémité d'une aube,
- chaque extrémité radialement externe d'une aube constitue un prolongement qui suit une corde en tête d'une pale de ladite aube,
- la paroi annulaire de l'anneau est constituée d'un assemblage de deux couronnes annulaires, respectivement amont et aval, lesdites couronnes étant munies de dents qui s'étendent sensiblement axialement et qui sont sensiblement complémentaires les unes des autres de façon à définir entre elles lesdites fentes,
- l'anneau comporte un flasque annulaire porteur d'éléments magnétiques de la machine électrique, qui coiffe les deux couronnes, et qui comporte une première extrémité reçue dans une gorge annulaire formée dans une collerette radiale extérieure d'une première des couronnes et une seconde extrémité munie d'une collerette radiale intérieure immobilisée contre une face libre d'une seconde des couronnes,
- la collerette radiale intérieure du flasque est immobilisée par l'intermédiaire d'un verrou annulaire extérieur qui est plaqué contre ladite collerette intérieure, et qui reçoit des vis axiales qui traversent ledit verrou annulaire extérieur, la collerette radiale du flasque, la seconde couronne et qui sont reçues dans la première couronne pour serrer les couronnes l'une contre l'autre,
- chaque couronne amont ou aval est formée d'un assemblage de deux demi-couronnes amont ou aval s'étendant angulairement sur sensiblement 180 degrés,
- le carter comporte dans son épaisseur un logement annulaire qui reçoit le stator de forme annulaire et l'anneau, et qui reçoit du côté du verrou annulaire, un panneau annulaire acoustique sectorisé,
- la soufflante comporte un moyeu qui porte les aubes, et des pieds des aubes qui sont conformés en broches sont enfilés axialement dans des zones de brochage complémentaires qui sont formées en périphérie d'une virole interne du moyeu et qui débouchent dans une face amont de ladite virole, lesdits pieds étant verrouillés axialement dans les zones de brochage par un verrou annulaire intérieur qui est fixé par des vis reçues dans une extrémité amont de la virole.
- le moyeu comporte une paroi annulaire d'habillage sectorisée qui entoure la virole du moyeu entre les aubes et qui est maintenue axialement entre une collerette arrière de la virole du moyeu et le verrou annulaire intérieur, et un cône de soufflante qui est fixé sur ledit verrou annulaire intérieur,

L'invention concerne aussi une turbomachine comportant un module électrique de soufflante du type précédemment décrit, ladite turbomachine comportant un réducteur planétaire ou épicycloïdal dont les organes sont liés à un carter de la turbomachine, à un arbre du corps basse pression, et à un arbre d'entraînement du moyeu de la soufflante.

L'invention concerne aussi un procédé de démontage et de montage/remontage d'au moins une aube du module électrique de soufflante du type décrit précédemment, caractérisé en ce qu'il comporte :
- une étape de démontage comportant au moins :
   - une première sous-étape au cours de laquelle on démonte le cône de soufflante, le verrou annulaire intérieur, et au moins une partie de la paroi annulaire d'habillage sectorisée du moyeu de soufflante pour libérer un pied de ladite au moins une aube,
   - une deuxième sous-étape au cours de laquelle on démonte au moins une partie du panneau acoustique sectorisé en regard d'au moins une demi-couronne amont en regard de ladite au moins une aube,
   - une troisième sous-étape au cours de laquelle on démonte le verrou annulaire extérieur,
   - une quatrième sous-étape au cours de laquelle on extrait axialement le flasque annulaire,
   - une cinquième sous-étape au cours de laquelle on extrait axialement au moins une demi-couronne amont en regard de ladite au moins une aube,
   - une sixième étape au cours de laquelle on extrait axialement le pied de ladite au moins une aube hors du moyeu,
- une étape de montage / remontage comportant les sous-étapes de l'étape de démontage, prises en ordre inverse.

### DESCRIPTION DES FIGURES

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue générale en coupe axiale d'un turboréacteur double flux de type UHBR ID selon l'état de la technique ;
- la figure 2 est une vue en perspective des extrémités des aubes d'une soufflante conventionnelle intégrant un rotor de machine électrique ;
- la figure 3 est une vue en bout d'une soufflante comportant un rotor de machine électrique selon l'invention ;
- la figure 4 est une vue en perspective partiellement coupée d'une machine électrique selon l'invention intégrée à une soufflante ;
- la figure 5 est une vue en perspective coupée de la machine électrique de la figure 4 ;
- la figure 6 est une vue de détail de la figure 4 ;
- la figure 7 est une vue de détail de l'anneau de la machine électrique de la figure 4 ;
- la figure 8 est une vue de détail en coupe du montage des aubes de la soufflante dans l'anneau de la machine électrique, et
- les figures 9 à 12 illustrent les étapes du démontage d'une machine électrique intégrée à une soufflante selon l'invention ; et

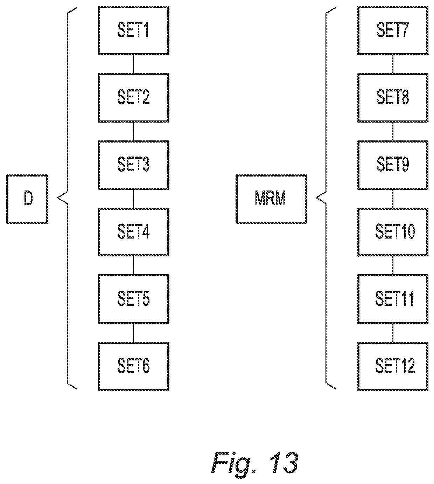

- la figure 13 est un diagramme-bloc illustrant les étapes d'un procédé de démontage et de montage/remontage d'une soufflante et d'une machine électrique d'une turbomachine selon l'invention.

### DESCRIPTION DETAILLEE

Dans la description qui va suivre, des chiffres de référence identiques désignent des pièces identiques ou ayant des fonctions similaires. Les désignations "amont" et "aval" sont définies par rapport à un sens d'écoulement des gaz à l'intérieur d'une turbomachine.

Les orientations sont définies par rapport à un trièdre L, T, R dont les directions sont une direction L longitudinale et parallèle à une direction axiale A de la turbomachine, une direction radiale R, perpendiculaire et coupant la direction axiale A de la turbomachine, et une direction T transversale et perpendiculaire à la direction R.

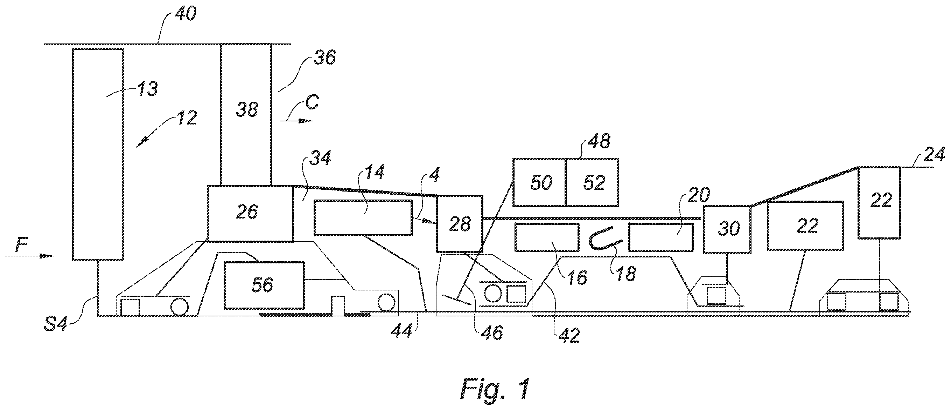

On a représenté à la figure 1 une turbomachine 10 d'aéronef conventionnelle de type UHBR ID, qui est ici un turboréacteur à double flux et à double corps. L'architecture globale de cette turbomachine 10 est une architecture classique à deux corps, connue de nombreuses turbomachines connues de l'état de la technique. Pour cette raison, dans la suite de la présente description, toute référence à l'architecture générale d'une turbomachine selon l'état de la technique sera faite en considérant la figure 1.

Pour l'essentiel, la turbomachine 10 comporte, d'amont en aval selon le sens d'écoulement des flux de gaz F dans la turbomachine, une soufflante 12 munie de pales 13 et montée tournante dans un carter 40, un compresseur basse-pression 14, un compresseur haute-pression 16, une chambre annulaire de combustion 18, une turbine haute-pression 20, une turbine basse-pression 22 et une tuyère d'échappement 24.

Les compresseur basse-pression 14, compresseur haute-pression 16, chambre annulaire de combustion 18, turbine haute-pression 20, turbine basse-pression 22 et tuyère d'échappement 24 sont respectivement logés entre des carter amont 26, carter inter-compresseurs 28, carter inter-turbines 30 et carter d'échappement 32 de la turbomachine.

Le flux d'air F pénétrant dans la soufflante se divise en un flux chaud H qui circule dans une veine primaire 34 traversant les compresseur basse-pression 14, compresseur haute-pression 16, chambre annulaire de combustion 18, turbine haute-pression 20, turbine basse-pression 22 et tuyère d'échappement 24, et un flux froid C circulant autour des carters 26, 28, 30, 32 dans un canal de flux froid 36.

Des aubes 38 d'un redresseur de sortie ou OGV, acronyme anglo-saxon de "outlet guide vane" sont placées dans le canal de flux froid 36 et participent au soutien du carter de soufflante 40. Les flux froid C et chaud H se rejoignent en sortie de la tuyère d'échappement 24.

Un rotor du compresseur haute-pression 16 et un rotor de la turbine haute-pression 20 sont reliés par un arbre haute-pression 42 et forment avec lui un corps haute-pression. Un rotor du compresseur basse-pression 14 et un rotor de la turbine basse-pression 22 sont reliés par un arbre basse-pression 44 et forment avec lui un corps basse-pression.

L'arbre haute pression 42 entraine par l'intermédiaire d'un arbre radial 46 une boite d'engrenages 48 qui contient un démarreur 50 et un générateur 52.

Selon certaines autres architectures connues de l'état de la technique, le démarreur 50 et le générateur 52 peuvent être remplacés par une machine électrique (non représentée) formant alternativement démarreur ou générateur.

Dans la partie amont de la turbomachine 10, la soufflante 12 est reliée à un arbre de soufflante 54 qui, dans l'exemple représenté, est lié en rotation à l'arbre BP 44 par l'intermédiaire d'un réducteur 56, par exemple un réducteur planétaire ou épicycloïdal 56, qui a été représenté ici de manière schématique, dont un organe est lié l'arbre de soufflante 54, un organe est lié à l'arbre basse pression 44 et un organe est lié au carter amont 26.

La soufflante 12 peut ainsi, lorsqu'elle est de très grande dimension, être mue à une vitesse de rotation inférieure à celle de l'arbre BP 44, afin de mieux l'adapter aérodynamiquement.

Dans cette conception toutefois, la production d'énergie électrique n'est assurée que par le générateur 52. Tant que les besoins de puissance électrique sont limités, cette conception est convenable. Toutefois, la puissance électrique pouvant être effectivement prélevée par le générateur 52 est limitée et n'est pas adaptée aux besoins croissants en puissance électrique des aéronefs modernes car la production d'une puissance électrique supérieure entraînerait nécessairement un prélèvement supplémentaire de puissance mécanique par le générateur 52 sur l'arbre haute pression HP 42, ce qui conduirait à une dégradation des performances du compresseur HP en risquant de provoquer des phénomènes de pompage, surtout lors des bas régimes de l'arbre HP.

En outre, dans cette configuration, le démarreur 48 ne permet que de démarrer la turbomachine, mais n'est pas à même de transmettre une quelconque puissance motrice à l'arbre 54 de la soufflante 12, puisqu'il n'est pas lié à l'arbre BP 44.

Pour bénéficier d'une puissance électrique supérieure, une solution consiste à proposer une turbomachine 10 équipée d'un module électrique de soufflante comportant une machine électrique liée à la soufflante 12. Cette machine électrique est réversible et fonctionne aussi bien en générateur qu'en moteur. En tant que générateur, elle est donc à même de fournir une puissance électrique, indépendamment ou en complément du générateur 52.

Par ailleurs, en tant que moteur, une telle machine électrique est également capable d'assurer des fonctions propulsives et permet de fournir une puissance motrice supplémentaire à la soufflante.

De telles machines électriques ont jusqu'à présent été proposées selon deux conceptions.

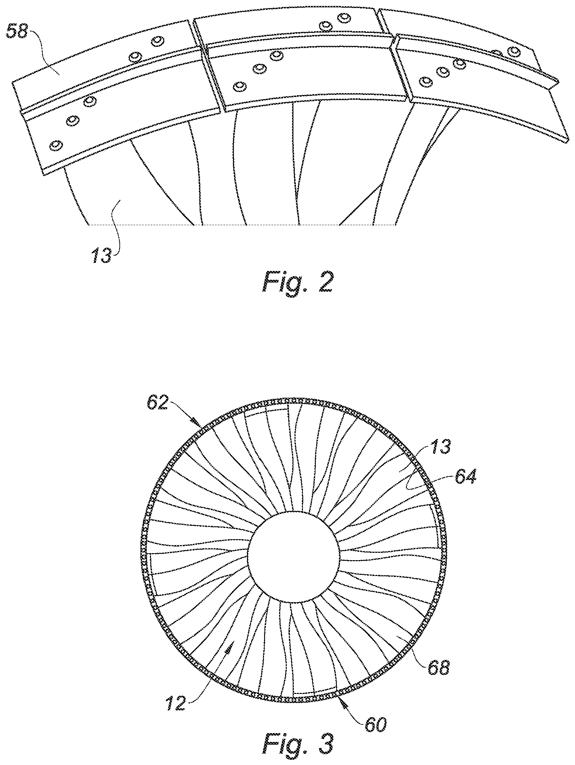

Selon une première conception, on a proposé d'intégrer le rotor de la machine électrique directement à la soufflante en intégrant directement les aimants permanents dans les aubes 13. Selon une seconde conception représentée à la figure 2, les aimants permanents ont été rapportés sous la forme de talons sectorisés qui sont fixés à l'extrémité des aubes 13.

Dans les deux cas, une masse a été ajoutée en bout de chaque aube 13, et de ce fait les aubes 13 ainsi adaptées sont soumises à une force centrifuge plus importante que des aubes conventionnelles. Cette force centrifuge peut entraîner des phénomènes d'élongation radiale des aubes 13 et être incompatible avec le maintien à tous les régimes de rotation d'un jeu fonctionnel adéquat entre les aubes 13 de la soufflante 12 et son carter 40.

En outre, une aube 13 de masse élevée nécessite pour son maintien l'utilisation d'un moyeu comportant un disque central de dimension élevée.

Enfin, en cas de perte d'une telle aube 13, l'énergie cinétique libérée par cette aube 13 est plus importante que celle libérée par une aube conventionnelle dans le même cas. Il s'ensuit que l'utilisation d'une telle aube 13 nécessite de disposer d'un carter 40 de soufflante plus massif, apte à supporter l'éjection d'une telle aube 13 sans risque d'être traversée par celle-ci. Une telle contrainte dimensionnelle pénalise largement la masse du moteur.

L'invention remédie à cet inconvénient en proposant un module électrique de soufflante 11 mettant en œuvre une nouvelle conception de rotor de la machine électrique intégrée à la soufflante 12.

Ce module est par exemple intégré à une turbomachine qui comporte, tout comme la turbomachine de l'art antérieur, un réducteur planétaire ou épicycloïdal dont les organes sont liés à un carter de la turbomachine, à un arbre du corps basse pression, et à un arbre d'entraînement d'un disque du moyeu de la soufflante.

Par exemple, un planétaire est lié l'arbre 44 du corps basse pression, un porte-satellites est lié l'arbre 54 d'entraînement, et une couronne est liée au carter 26.

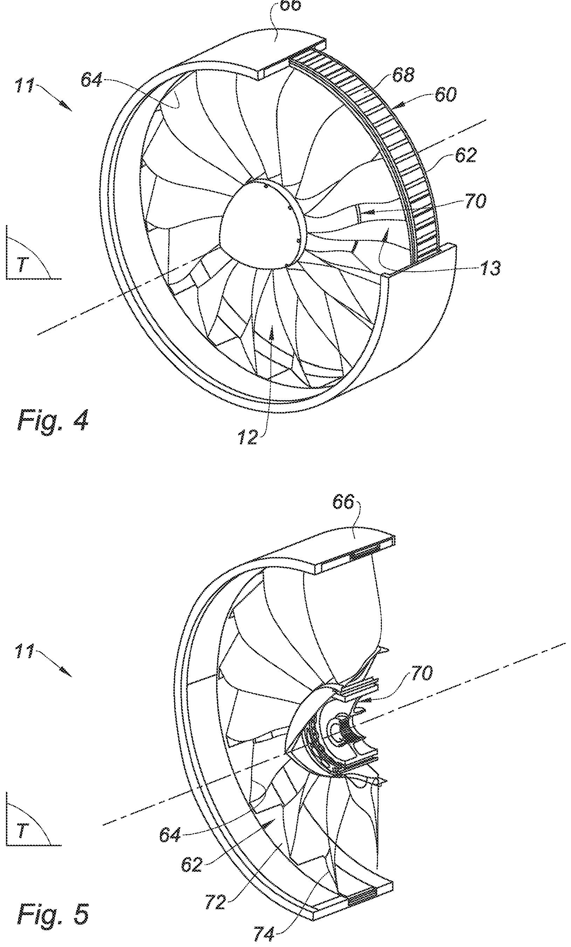

Conformément à l'invention, comme l'illustre la figure 3 et plus particulièrement la figure 4, le module électrique de soufflante comporte un rotor 60 de la machine électrique qui est est intégré à la soufflante et il comporte un anneau amovible 62 qui emprisonne, uniquement axialement suivant l'axe A et transversalement par rapport à cet axe A, des extrémités 64 radialement externes des aubes 13 de la soufflante 12, et qui laisse libre radialement chaque extrémité radialement externe 64 par rapport à l'anneau 62. De la sorte, les extrémités 64 des aubes 13 sont susceptibles, lors de leur élongation sous l'effet de forces centrifuges d'être soumises à un léger débattement radial.

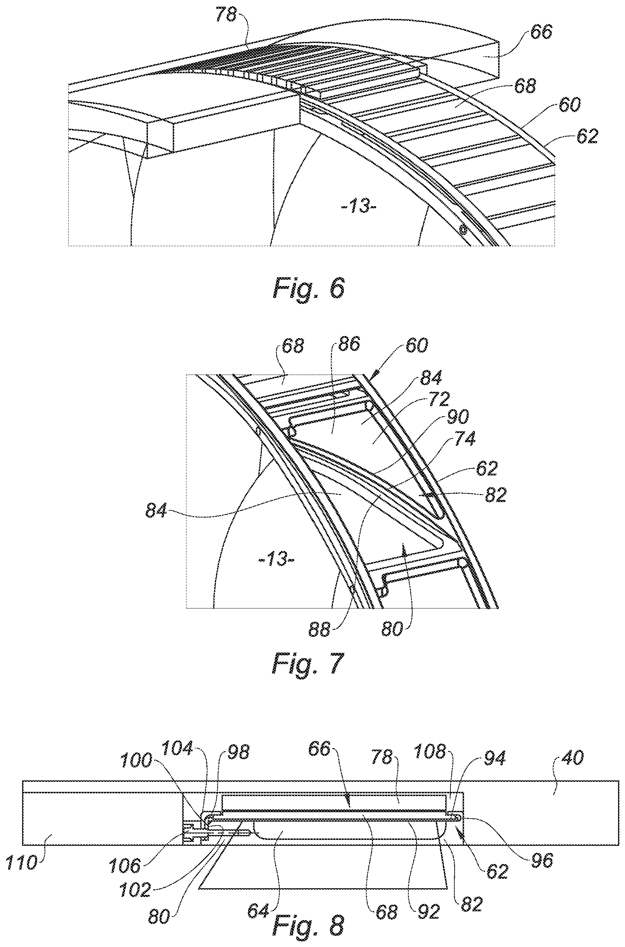

Cet anneau 62 est, comme l'illustre la figure 3, reçu à l'intérieur d'un stator 66 qui est destiné à être intégré au carter 40 de soufflante précédemment représenté à la figure 1. Selon la conception qui a été représentée sur les figures, l'anneau 62 porte des aimants permanents 74. Comme l'illustre la figure et plus en détail la figure 6, le stator 66, quant à lui, porte des bobinages 78 agencés au droit des aimants permanents 68 du rotor 60.II sera compris que cette configuration n'est pas limitative de l'invention, et que l'anneau 62 pourrait par exemple comporter des bobinages, les aimants permanents étant alors portés par le stator 66.

La configuration présentée ici permet d'assurer un routage des servitudes électriques de la machine électrique, telles que des harnais électriques reliés aux bobinages 78, de manière très simple, en les reliant directement à un pylône supportant la turbomachine, sans nécessiter de câblage interne à la turbomachine.

Différentes topologies de machines électriques sont envisageables, comme des machines électriques discoïdes à flux axiales, radiales, ou des machines asynchrones.

Cette configuration permet aussi une grande accessibilité à la machine électrique par l'intermédiaire de capots de soufflante ou de trappes d'accès (non représentés) disposés dans le carter 40 de la soufflante.

Elle présente également l'avantage de ne pas augmenter l'encombrement de la turbomachine, l'intégration de la machine électrique dans la soufflante 12 étant sans impact sur la longueur de la turbomachine.

Comme l'illustrent les figures 2 et 3, la configuration du rotor 60 de machine électrique sous la forme d'un anneau 62 circonvenant les extrémités 64 des aubes 13 permet, comme on va le voir, de s'opposer aux déformations de flexion que celles-ci seraient susceptibles de subir dans le cadre d'une conception conventionnelle ayant les aimants placés à l'extrémité des aubes 13. Elle permet surtout de remplacer les sollicitations de traction auxquelles les aubes 13 sont conventionnellement soumises sous l'effet des forces centrifuges, comme on le verra, par des sollicitations de compression.

L'anneau 62 permet en outre de répartir la masse des aimants permanents 68 sur toute sa périphérie.

Les aubes 13 sont préférentiellement des aubes de construction conventionnelle, réalisées en matériau composites, et ne nécessitent donc pas d'être réalisés sous un procédé de fabrication particulier pour être intégrées dans la machine électrique.

Toutefois les aubes 13 pourraient être métalliques, pleines ou creuses.

Les aubes 13 sont, comme on le verra dans la suite de la présente description, fixées à un moyeu 70 de la soufflante.

Comme l'illustre la figure 4, l'anneau amovible 62 emprisonne des extrémités 64 radialement externes des aubes 13 de la soufflante 12, axialement suivant l'axe A, et il les emprisonne aussi transversalement par rapport à cet axe A, c'est-à-dire dans un plan T transversal perpendiculaire à l'axe A.

A cet effet, l'anneau 62 comporte une paroi annulaire 72 qui s'étend au niveau des extrémités radialement externes 64 des aubes 13 et qui comprend des fentes 74 traversées par ces extrémités radialement externes 64, chaque fente 74 ayant une forme complémentaire à celle du profil de l'extrémité 64 d'une aube 13. Sur la figure 7 on a représenté le détail d'une fente 74.

De ce fait, les extrémités radialement externes 64 des aubes 13 ont un degré de liberté radial et sont susceptibles de se déplacer radialement dans les fentes 74 sous l'effet de l'élongation des aubes 13 lorsqu'elles sont soumises à des efforts centrifuges et en cas de dilatation de l'anneau 62.

Les fentes 74 permettent d'assurer une reprise des efforts transversaux aux extrémités radialement externes 64 des aubes 13. De plus, la multitude des efforts de reprise répartis sur toutes les aubes 13 permet d'assurer un centrage de l'anneau 62.

De préférence, chaque extrémité radialement externe 64 d'une aube constitue un prolongement qui suit la corde en tête de la pale de ladite aube 13. L'extrémité radialement externe 64 n'est donc pas une surface aérodynamiquement active de l'aube 13 mais est uniquement dévolue à sa fixation dans la fente 74. Préférentiellement, l'extrémité radialement externe 64 est toutefois agencée dans le prolongement d'une surface aérodynamiquement active de l'aube 13

Comme on le verra dans la suite de la présente description, des pieds 76 des aubes 13 sont enfilées par brochage dans le moyeu 70, de sorte que le montage et le démontage des aubes 13 peut être effectué axialement. Il importe donc que les extrémités radialement externes 64 soient également extraites axialement de l'anneau 62.

A cet effet, comme l'illustrent les figures 7, 8 et 11, la paroi annulaire 72 de l'anneau 62 est constituée d'un assemblage de deux couronnes annulaires 80, 82, respectivement une couronne amont 82 et une couronne aval 82 imbriquées l'une dans l'autre. Les couronnes 80, 82 sont munies de dents correspondantes 84, 86 qui s'étendent sensiblement axialement et qui sont sensiblement complémentaires les unes des autres de façon à définir entre elles les fentes 74. Des bords 88, 90 en regard des dents 84, 86 sont donc respectivement complémentaires de côtés d'extrados 92 et d'intrados 94 des extrémités radialement externes 64 des pales 13.

Les couronnes 80, 82 emprisonnent donc les extrémités radialement externes 64 des aubes entre leurs bords 88, 90 en les prenant en étau. Un léger débattement radial des aubes 13 est, comme on l'a vu permis dans les fentes 74, afin que le montage des aubes 13, par ailleurs immobilisées dans le moyeu 70, ne soit pas hyperstatique et ne risque pas d'induire de contraintes radiales dans les aubes 13.

Chaque aube 13 étant prise en étau entre les couronnes 80, 82, le jeu au sommet des aubes 13 est réduit, ce qui permet d'améliorer les performances de la soufflante 12.

Comme l'illustre par ailleurs la figure 8, dans le mode de réalisation non limitatif qui a été présenté ici, l'anneau 62 comporte un flasque annulaire 92 qui est porteur des aimants permanents 68. Ce flasque 92 coiffe les deux couronnes 80, 82. Le flasque 92 comporte, d'une part une première extrémité 94 qui est reçue dans une gorge annulaire 96 formée dans une collerette radiale extérieure de la couronne aval 82. Du côté opposé, le flasque 92 comporte une seconde extrémité 98 munie d'une collerette radiale intérieure 100 qui est immobilisée contre une face libre 102 de la couronne amont 80.

Pour permettre la fixation du flasque 92 et l'immobilisation des couronnes 80, 82, la collerette radiale intérieure 100 du flasque est immobilisée par l'intermédiaire d'un verrou annulaire extérieur 104 qui est plaqué contre la collerette intérieure 100, et qui reçoit des vis axiales 106 qui le traversent. Les vis 106 traversent le verrou annulaire extérieur 104, la collerette radiale 100 du flasque, la couronne amont 80 et elles sont reçues dans la couronne aval 82 pour serrer les couronnes 80, 82 l'une contre l'autre.

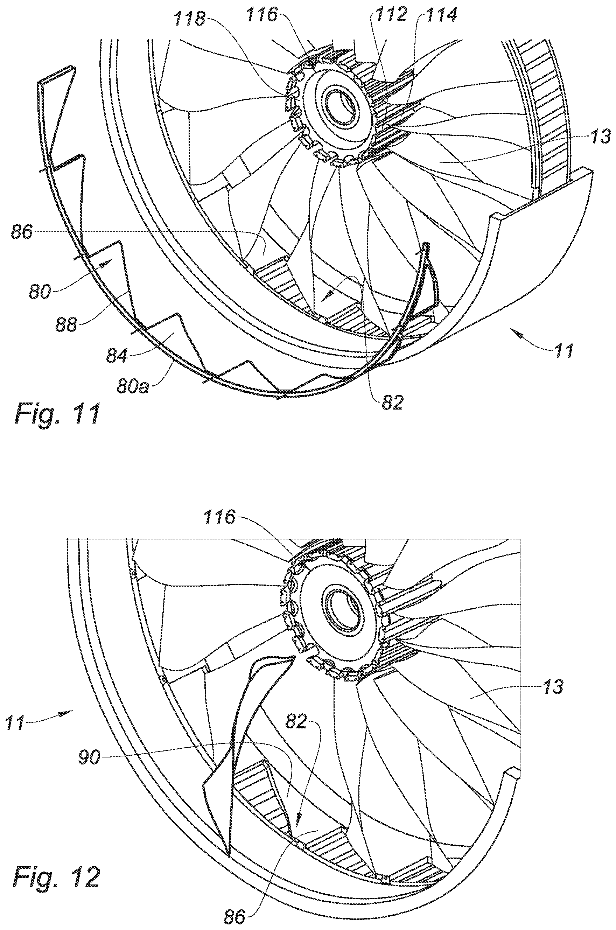

Les couronnes 80, 82 pourraient être monobloc. Toutefois, s'agissant de pièces de grandes dimensions, chaque couronne amont 80 ou aval 82 est formée d'un assemblage de deux demi-couronnes amont ou aval s'étendant angulairement sur sensiblement 180 degrés. On a représenté à la figure 11 une demi-couronne amont 80a.

Cette conception permet notamment de n'extraire qu'une des deux demi-couronnes 80 par exemple lorsqu'il s'agit de ne démonter qu'un nombre limité d'aubes 13 en regard de cette demi-couronne 80a.

En ce qui concerne le montage du stator 66, le carter 40 comporte avantageusement dans son épaisseur un logement annulaire 108 qui reçoit le stator 66 de forme annulaire et l'anneau 62, et qui reçoit du côté du verrou annulaire 104, un panneau annulaire acoustique 110 sectorisé.

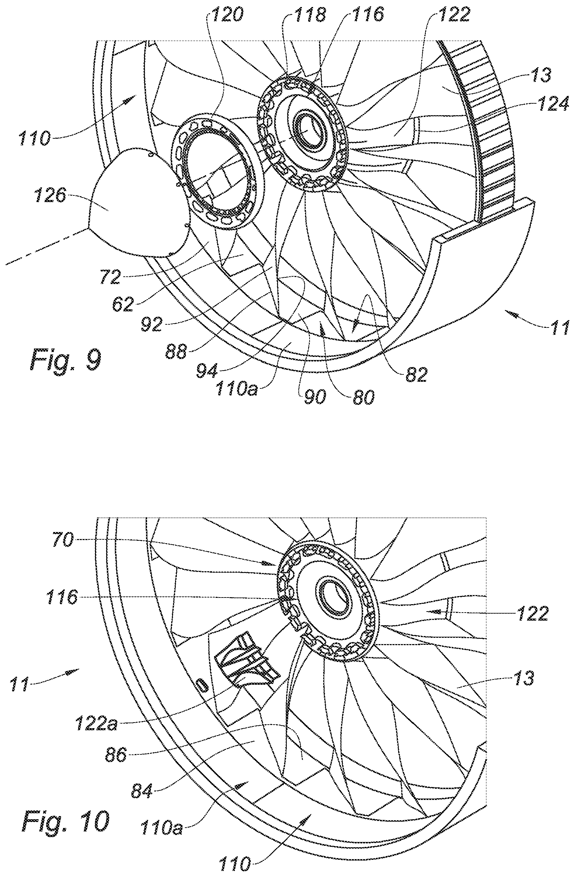

Comme l'illustre la figure 9, le panneau annulaire acoustique 110 sectorisé comporte plusieurs secteurs 110a, de manière à permettre son démontage secteur par secteur. Cette conception permet notamment de n'extraire qu'un nombre limité de secteurs 110 de panneau acoustique 110, par exemple lorsqu'il s'agit de ne démonter qu'un nombre limité d'aubes 13.

C'est en effet un avantage de l'invention que de permettre l'extraction d'un nombre limité d'aubes 13, ces aubes pouvant être extraites sans dépose de la soufflante 12 qui peut demeurer en place sous l'aile de l'aéronef.

Eventuellement, des paliers (non représentés) peuvent être interposés entre les couronnes 80, 82 ou le flasque 92 et le stator 66 pour assurer une reprise des efforts axiaux s'exerçant sur la soufflante 12. Ces paliers pourront être hydrodynamiques, magnétiques ou encore aérodynamiques.

Il importera en tout état de cause de procéder à un équilibrage parfait du rotor 60 pour éviter de générer de fortes vibrations car le balourd d'un élément tournant est d'autant plus élevé que sa masse est éloignée de son axe de rotation.

Comme on l'a évoqué ci-dessus, les aubes 13 sont fixées de manière par brochage un moyeu 70 de la soufflante. Comme l'illustre la figure 11, des pieds 112 des aubes 13 qui sont conformés en broches sont enfilés axialement dans des zones de brochage complémentaires 114 qui sont formées en périphérie d'un disque 116 du moyeu 70. Les zones de brochage 114 débouchent dans une face amont 118 de la virole 116.

Comme l'illustre la figure 9, les pieds sont verrouillés axialement dans les zones de brochage 114 par un verrou annulaire intérieur 120. Ce verrou annulaire intérieur 120 est fixé par des vis (non représentées) reçues dans une extrémité amont du disque 116. Il permet ainsi de bloquer axialement les pieds 112. Les pieds 112 peuvent par exemple être conformés en queue d'aronde et reçus dans des zones de brochage complémentaires 114 ayant la forme de glissières complémentaires. Un cône 126 de soufflante est en outre fixé sur le verrou annulaire intérieur 120.

Le moyeu 70 comporte en outre une paroi annulaire d'habillage sectorisée 122 qui entoure le disque 116 du moyeu 110. Comme l'illustre la figure 10, des secteurs 122a de la paroi annulaire d'habillage sectorisée 122 sont agencés et s'étendent entre les pales des aubes 13. Comme l'illustre la figure 9, la paroi annulaire d'habillage sectorisée 122 est maintenue axialement entre une collerette arrière 124 du disque 116 du moyeu 70 et le verrou annulaire intérieur 120.

Dans cette configuration, au moins une aube 13 de la soufflante 12 et la machine électrique peut être démontée ou remontée respectivement selon un procédé de démontage et de montage/remontage.

Ce procédé comporte notamment une étape de démontage D comportant au moins une première sous-étape SET1 au cours de laquelle on démonte le cône 126 de soufflante, le verrou annulaire intérieur 120, et au moins une partie de la paroi annulaire 122 d'habillage sectorisée en enlevant les secteurs 122a de la virole 116 du moyeu 70 de soufflante qui environnent au moins la ou les aubes 13 à démonter.

Puis au cours d'une deuxième sous-étape SET2, on démonte le panneau acoustique sectorisé 110. A cet effet, on démonte les secteurs 110a de ce panneau en regard de l'aube 13 ou des aubes à démonter.

Puis, au cours d'une troisième sous-étape SET 3 on démonte le verrou annulaire extérieur 104. Ensuite, au cours d'une quatrième sous-étape SET 4, on extrait axialement le flasque annulaire 92. On peut alors, au cours d'une cinquième sous-étape SET 5 extraire axialement au moins une des deux demi-couronnes de la couronne amont 80 en regard de la ou des aubes 13 à démonter. Enfin, au cours d'une sixième étape SET6, on extrait axialement les pieds 112 des aubes 13 hors des zones d'enracinement 114 de la virole 116 du moyeu 70, et on enlève la ou les aubes 13 concernées par le démontage.

Inversement, le procédé comporte notamment une étape de montage / remontage MRM comportant des sous-étapes SET7 à SET12 analogues aux étapes SET1 à SET6 de l'étape de démontage D, prises en ordre inverse, qu'il s'agisse du montage d'une seule aube 13, d'un nombre déterminé d'aubes, ou de la totalité de celles-ci.

Par exemple, pour effectuer le montage ou le remontage de toutes les aubes 13 d'une soufflante 12, au cours d'une septième sous-étape SET7, on insère axialement les pieds 112 des aubes 13 dans les zones d'enracinement 114 de la virole 116 du moyeu 70. Puis au cours d'une huitième sous-étape SET8 on insère axialement les deux demi-couronnes de la couronne amont 80. On vient alors coiffer les deux couronnes 80, 82 avec le flasque annulaire 92 au cours d'une neuvième sous-étape SET9. On l'immobilise alors avec le verrou annulaire 104 au cours d'une dixième sous-étape SET10. On monte ensuite le panneau acoustique sectorisé 110 en insérant successivement les secteurs 110a de ce panneau dans le logement annulaire 108 au cours d'une onzième sous-étape SET11. Enfin, au cours d'une douzième sous-étape SET13, on monte la paroi annulaire 122 d'habillage sectorisée en insérant les secteurs 122a de la virole 116 autour du moyeu 70 de soufflante, puis on monte le verrou annulaire intérieur 120, et enfin on fixe le cône 126 de soufflante au verrou annulaire intérieur 120.

L'invention permet donc de proposer une conception simple et fiable d'un module électrique 11 de soufflante comportant une machine électrique intégrée à une soufflante 12 de turbomachine.

Par rapport à une conception conventionnelle, elle permet de reporter la masse des aimants permanents sur la périphérie de l'anneau 62 et non à l'extrémité extérieure 64 des aubes 13. Ceci permet d'éviter qu'une rupture d'une aube due par exemple à l'ingestion d'un corps étranger n'ait une influence sur le fonctionnement du rotor 60. En outre, le maintien des extrémités 76 des aubes dans l'anneau 62 permet de minimiser les masses susceptibles d'être centrifugées en cas de rupture d'une aube 13. Notamment, selon cette conception, une rupture de l'aube à proximité du moyeu ne provoque pas, à la différence des conceptions conventionnelles, d'éjection de débris centrifugés à haute énergie. Cette configuration permet un gain de masse significatif du carter de soufflante.

## Revendications

1. Module électrique (11) de soufflante d'aéronef d'axe A comportant une soufflante (12) munie d'aubes (13), mobile en rotation à l'intérieur d'un carter (40), et une machine électrique pouvant fonctionner en moteur ou en générateur comportant un rotor (60) solidaire de la soufflante (12) et un stator (66) intégré audit carter (40),
**caractérisé en ce que** le rotor (60) de la machine électrique est intégré à la soufflante (12) et **en ce qu'**il comporte un anneau amovible (62) :
- qui comporte une paroi annulaire (72) constituée d'un assemblage de deux couronnes annulaires (80, 82), respectivement amont et aval imbriquées l'une dans l'autre, lesdites couronnes (80, 82) étant munies de dents (84, 86) et de bords (88,90) en regard des dents (84, 86), les dents s'étendant sensiblement axialement et étant sensiblement complémentaires les unes des autres de façon à définir entre elles des fentes (74), lesdites couronnes (80, 82) emprisonnant axialement et transversalement des extrémités radialement externes (64) des aubes (13) de la soufflante (12) entre lesdits bords (88,90),
- qui laisse libre radialement chaque extrémité radialement externe (64) par rapport à l'anneau (62), et
- qui est reçu à l'intérieur dudit stator (66) intégré au carter (40).

2. Module électrique (11) de soufflante selon la revendication précédente, dans lequel la paroi annulaire (72) s'étend au niveau des extrémités radialement externes (64) des aubes (13), les extrémités radialement externes (64) traversant les fentes (74) , chaque fente (74) ayant une forme complémentaire à celle du profil de l'extrémité radialement externe (64) d'une aube (13).

3. Module électrique (11) de soufflante selon la revendication précédente, dans lequel chaque extrémité radialement externe (64) d'une aube (13) constitue un prolongement qui suit une corde en tête d'une pale de ladite aube (13).

4. Module électrique (11) de soufflante selon l'une des revendications précédentes, dans lequel l'anneau (62) comporte un flasque annulaire (92) porteur d'éléments magnétiques (68) de la machine électrique, qui coiffe les deux couronnes (80, 82), et qui comporte une première extrémité (94) reçue dans une gorge annulaire (96) formée dans une collerette radiale extérieure d'une première des couronnes (82) et une seconde extrémité (98) munie d'une collerette radiale intérieure (100) immobilisée contre une face libre (102) d'une seconde des couronnes (80).

5. Module électrique (11) de soufflante selon la revendication précédente, dans lequel la collerette radiale intérieure (100) du flasque (92) est immobilisée par l'intermédiaire d'un verrou annulaire extérieur (104) qui est plaqué contre ladite collerette intérieure (100), et qui reçoit des vis axiales (106) qui traversent ledit verrou annulaire extérieur (104), la collerette (100) radiale du flasque (92), la seconde couronne (80) et qui sont reçues dans la première couronne (82) pour serrer les couronnes (80, 82) l'une contre l'autre.

6. Module électrique (11) de soufflante selon l'une des revendications 1 à 5, dans lequel chaque couronne (80, 82) amont ou aval est formée d'un assemblage de deux demi-couronnes amont ou aval s'étendant angulairement sur sensiblement 180 degrés.

7. Module électrique (11) de soufflante selon la revendication 5, dans lequel le carter (40) comporte dans son épaisseur un logement annulaire (108) qui reçoit le stator (66) de forme annulaire et l'anneau (62), et qui reçoit du côté du verrou annulaire (104), un panneau annulaire acoustique sectorisé (110).

8. Module électrique (11) de soufflante selon l'une des revendications précédentes, dans lequel la soufflante (12) comporte un moyeu (70) qui porte les aubes (13), et en ce que des pieds (112) des aubes (13) qui sont conformés en broches sont enfilés axialement dans des zones de brochage complémentaires (114) qui sont formées en périphérie d'un disque interne (116) du moyeu (70) et qui débouchent dans une face amont de ladite virole (116), lesdits pieds (112) étant verrouillés axialement dans les zones de brochage (114) par un verrou annulaire intérieur (120) qui est fixé par des vis reçues dans une extrémité amont de la virole (116).

9. Module électrique (11) de soufflante selon la revendication précédente, dans lequel le moyeu (70) comporte une paroi annulaire d'habillage sectorisée (122) qui entoure le disque (116) du moyeu en s'étendant entre les aubes (13), et qui est maintenue axialement entre une collerette arrière (124) du disque (116) du moyeu (70) et le verrou annulaire intérieur (120), et en ce que le moyeu (70) comporte un cône de soufflante (126) qui est fixé sur ledit verrou (120).

10. Turbomachine (10) comportant un module électrique de soufflante selon l'une des revendication précédentes, **caractérisée en ce qu'**elle comporte un réducteur planétaire ou épicycloïdal (56) dont les organes sont liés à un carter (26) de la turbomachine, à un arbre du corps basse pression (44), et à un arbre d'entraînement (54) du moyeu de la soufflante (12).

11. Procédé de démontage et de montage/remontage d'au moins une aube (13) d'un module électrique de soufflante (11) selon la revendication 9 prise en combinaison avec les revendications 5 et 6, **caractérisé en ce qu'**il comporte :
- une étape de démontage (D) comportant au moins :
• une première sous-étape (SET1) au cours de laquelle on démonte le cône (126) de soufflante, le verrou annulaire intérieur (120), et au moins une partie de la paroi annulaire d'habillage sectorisée (122) du moyeu (70) de soufflante pour libérer au moins un pied (112) de ladite au moins une aube (13),
• une deuxième sous-étape (SET2) au cours de laquelle on démonte au moins une partie du panneau acoustique sectorisé (110) en regard de ladite au moins une aube (13),
• une troisième sous-étape (SET3) au cours de laquelle on démonte le verrou annulaire extérieur (104),
• une quatrième sous-étape (SET4) au cours de laquelle on extrait axialement le flasque annulaire (92),
• une cinquième sous-étape (SET5) au cours de laquelle on extrait axialement au moins une demi-couronne amont (80a) en regard de ladite au moins une aube (13),
• une sixième étape (SET6) au cours de laquelle on extrait axialement le pied (112) de ladite au moins une aube (13) hors du moyeu (70),
- une étape de montage / remontage (MRM) comportant les sous-étapes de l'étape de démontage, prises en ordre inverse.

## Patentansprüche

1. Elektrisches Gebläsemodul (11) eines Luftfahrzeugs mit Achse A, umfassend ein mit Schaufeln (13) ausgestattetes Gebläse (12), drehbeweglich im Inneren eines Gehäuses (40), und eine elektrische Maschine, die als Motor oder als Generator betrieben werden kann, umfassend einen mit dem Gebläse (12) fest verbundenen Rotor (60) und einen mit dem Gehäuse (40) integrierten Stator (66),
**dadurch gekennzeichnet, dass** der Rotor (60) der elektrischen Maschine mit dem Gebläse (12) integriert ist, und dadurch, dass er einen abnehmbaren Ring (62) umfasst:
- der eine ringförmige Wand (72) umfasst, die aus einer Baugruppe von zwei ringförmigen Kronen (80, 82) besteht, die jeweils stromaufwärts und stromabwärts ineinander verschachtelt sind, wobei die Kronen (80, 82) mit Zähnen (84, 86) und den Zähnen (84, 86) gegenüberliegenden Kanten (88, 90) ausgestattet sind, wobei sich die Zähne im Wesentlichen axial erstrecken und im Wesentlichen auf eine Weise einander komplementär sind, um zwischen sich Schlitze (74) zu definieren, wobei die Kronen (80, 82) axial und transversal radial externen Enden (64) der Schaufeln (13) des Gebläses (12) zwischen den Kanten (88, 90) einsperren,
- der jedes radial externe Ende (64) in Bezug auf den Ring (62) frei lässt und
- der im Inneren des mit dem Gehäuse (40) integrierten Stators (66) aufgenommen ist.

2. Elektrisches Gebläsemodul (11) nach dem vorstehenden Anspruch, wobei die ringförmige Wand (72) sich auf Höhe der radial externen Enden (64) der Schaufeln (13) erstreckt, wobei die radial externen Enden (64) die Schlitze (74) durchqueren, wobei jeder Schlitz (74) eine zu dem Profil des radial externen Endes (64) einer Schaufel (13) komplementäre Form aufweist.

3. Elektrisches Gebläsemodul (11) nach dem vorstehenden Anspruch, wobei jedes radial externe Ende (64) einer Schaufel (13) eine Verlängerung konstituiert, die einer Kreissehne an der Spitze eines Blatts der Schaufel (13) folgt.

4. Elektrisches Gebläsemodul (11) nach einem der vorstehenden Ansprüche, wobei der Ring (62) einen magnetische Elemente (68) der elektrischen Maschine tragenden ringförmigen Flansch (92) umfasst, der die zwei Kronen (80, 82) überdeckt, und der ein in einer ringförmigen Auskehlung (96), die in einer radial äußeren Einfassung einer ersten der Kronen (82) gebildet ist, aufgenommenes erstes Ende (94) und ein zweites Ende (98), das mit einer radial inneren Einfassung (100) ausgestattet ist, die gegen eine freie Fläche (102) einer zweiten der Kronen (80) immobilisiert ist, umfasst.

5. Elektrisches Gebläsemodul (11) nach dem vorstehenden Anspruch, wobei die radial innere Einfassung (100) des Flansches (92) mittels einer äußeren ringförmigen Sperre (104) immobilisiert ist, die gegen die innere Einfassung (100) angedrückt ist, und die axiale Schrauben (106) aufnimmt, die die äußere ringförmige Sperre (104), die radiale Einfassung (100) des Flansches (92), die zweite Krone (80) durchqueren und die in der erste Krone (82) aufgenommen sind, um die Kronen (80, 82) gegeneinander zu drücken.

6. Elektrisches Gebläsemodul (11) nach einem der Ansprüche 1 bis 5, wobei jede stromaufwärtige oder stromabwärtige Krone (80, 82) aus einer Baugruppe von zwei stromaufwärtigen oder stromabwärtigen Halbkronen gebildet ist, die sich winkelmäßig auf im Wesentlichen 180 Grad erstrecken.

7. Elektrisches Gebläsemodul (11) nach Anspruch 5, wobei das Gehäuse (40) in seiner Dicke eine ringförmige Aufnahme (108) umfasst, die den Stator (66) von ringförmiger Form und den Ring (62) aufnimmt, und die von der Seite der ringförmigen Sperre (104) eine in Sektoren unterteilte, ringförmige Akustikplatte (110) aufnimmt.

8. Elektrisches Gebläsemodul (11) nach einem der vorstehenden Ansprüche, wobei das Gebläse (12) eine Nabe (70) umfasst, die die Schaufeln (13) trägt, und dadurch, dass Füße (112) der Schaufeln (13), die als Stifte ausgebildet sind, axial in komplementären Stiftbelegungszonen (114) aufgereiht sind, die am Umfang einer internen Scheibe (116) der Nabe (70) gebildet sind und die in einer Fläche stromaufwärts des Klemmrings (116) münden, wobei die Füße (112) in den Stiftbelegungszonen (114) axial durch eine innere ringförmige Sperre (120) verriegelt sind, die durch die in einem Ende stromaufwärts des Klemmrings (116) aufgenommenen Schrauben fixiert ist.

9. Elektrisches Gebläsemodul (11) nach dem vorstehenden Anspruch, wobei die Nabe (70) eine ringförmige Wand (122) mit in Sektoren unterteilter Verkleidung umfasst, die die Scheibe (116) der Nabe umgibt und die sich zwischen den Schaufeln (13) erstreckt und die axial zwischen einer hinteren Einfassung (124) der Scheibe (116) der Nabe (70) und der inneren ringförmigen Sperre (120) gehalten wird, und dadurch, dass die Nabe (70) einen Gebläsekonus (126) umfasst, der an der Sperre (120) fixiert ist.

10. Turbotriebwerk (10), umfassend ein elektrisches Gebläsemodul nach einem der vorstehenden Ansprüche, **dadurch gekennzeichnet, dass** es ein Planeten- oder Epizykloidengetriebe (56) umfasst, von dem die Bauteile mit einem Gehäuse (26) des Turbotriebwerks, mit einer Welle des Niederdruckkörpers (44) und mit einer Antriebswelle (54) der Nabe des Gebläses (12) verbunden sind.

11. Verfahren zur Zerlegung und zum Aufbau/Wiederaufbau von mindestens einer Schaufel (13) eines elektrischen Gebläsemoduls (11) nach Anspruch 9 in Kombination mit den Ansprüchen 5 und 6, **dadurch gekennzeichnet, dass** es Folgendes umfasst:
- einen Schritt der Zerlegung (D), umfassend mindestens:
- einen ersten Teilschritt (SET1), im Laufe dessen der Konus (126) des Gebläses, die innere ringförmige Sperre (120) und mindestens ein Teil der ringförmigen Wand (122) mit in Sektoren unterteilter Verkleidung der Nabe (70) des Gebläses zerlegt werden, um mindestens einen Fuß (112) der mindestens einen Schaufel (13) freizugeben,
- einen zweiten Teilschritt (SET2), im Laufe dessen das mindestens eine Teil der in Sektoren unterteilten Akustikplatte (110) gegenüber der mindestens einen Schaufel (13) zerlegt wird,
- einen dritten Teilschritt (SET3), im Laufe dessen die äußere ringförmige Sperre (104) zerlegt wird,
- einen vierten Teilschritt (SET4), im Laufe dessen der ringförmige Flansch (92) axial extrahiert wird,
- einen fünften Teilschritt (SETS), im Laufe dessen mindestens eine stromaufwärtigen Halbkrone (80a) gegenüber der mindestens einen Schaufel (13) axial extrahiert wird,
- einen sechsten Schritt (SET6), im Laufe dessen der Fuß (112) der mindestens einen Schaufel (13) außerhalb der Nabe (70) extrahiert wird,
- einen Schritt des Aufbaus/Wiederaufbaus (MRM) der die Teilschritte des Schritts der Zerlegung, in umgekehrter Reihenfolge genommen, umfasst.

## Claims

1. An electric module (11) of an aircraft fan of axis A comprising a fan (12) provided with vanes (13), which are rotatably movable inside a casing (40), and an electric machine which can operate as a motor or as a generator comprising a rotor (60) secured to the fan (12) and a stator (66) integrated into said casing (40),
**characterised in that** the rotor (60) of the electric machine is integrated into the fan (12) and **in that** it comprises a removable annulus (62):
- which comprises an annular wall (72) constituted by an assembly of two annular rings (80, 82), respectively upstream and downstream embedded within each other, said rings (80, 82) being provided with teeth (88,90) and edges (84, 86) opposite the teeth (88,90), the teeth (88,90) extending substantially axially and being substantially complementary to each other so as to define slots (74) between them, said rings (80, 82) capturing axially and transversely radially outer end (64) of the vanes (13) of the fan (12) between said edges (84, 86);
- which leaves each radially outer end (64) radially free with respect to the annulus (62), and
- which is received inside said stator (66) which is integrated into the casing (40).

2. The electric fan module (11) according to the preceding claim, wherein the annular wall (72) extends at the level of the radially outer ends (64) of the vanes (13), the radially outer ends (64) passing through the slots (74), each slot (74) having a shape complementary to that of the profile of the radially outer end (64) of a vane (13).

3. The electric fan module (11) according to the preceding claim, wherein each radially outer end (64) of a vane (13) constitutes an extension which follows a chord at the tip of a blade of said vane (13).

4. The electric fan module (11) according to one of the preceding claims, **characterised in that** the annulus (62) comprises an annular flange (92) carrying magnetic elements (68) of the electric machine, which caps the two rings (80, 82) and which comprises a first end (94) received in an annular groove (96) formed in an outer radial collar of a first of the rings (82) and a second end (98) provided with an inner radial collar (100) immobilised against a free face (102) of a second of the rings (80).

5. The electric fan module (11) according to the preceding claim, wherein the inner radial collar (100) of the flange (92) is immobilised by means of an outer annular lock (104) which is pressed against said inner collar (100), and which receives axial screws (106) which pass through said outer annular lock (104), the radial collar (100) of the flange (92), the second ring (80) and which are received in the first ring (82) to clamp the rings (80, 82) against each other.

6. The electric fan module (11) according to any of claims 1 to 5, wherein each upstream or downstream ring (80, 82) is formed from an assembly of two upstream or downstream half-rings extending angularly over substantially 180 degrees.

7. The electric fan module (11) according to claim 5, wherein the casing (40) comprises in its thickness an annular housing (108) which receives the stator (66) of annular shape and the annulus (62), and which receives, on the side of the annular lock (104), a sectorised annular acoustic panel (110).

8. The electric fan module (11) according to one of the preceding claims, wherein the fan (12) comprises a hub (70) which carries the vanes (13), and in that roots (112) of the vanes (13) which are shaped like pins are threaded axially into complementary pinning zones (114) which are formed on the periphery of an internal disc (116) of the hub (70) and which open into an upstream face of said shroud (116), said roots (112) being locked axially in the pinning zones (114) by an inner annular lock (120) which is secured by screws received in an upstream end of the shroud (116).

9. The electric fan module (11) according to the preceding claim, wherein the hub (70) comprises a sectorised annular covering wall (122) which surrounds the disc (116) of the hub extending between the vanes (13), and which is held axially between a rear collar (124) of the disc (116) of the hub (70) and the inner annular lock (120), and in that the hub (70) comprises a fan cone (126) which is secured to said lock (120).

10. A turbomachine (10) comprising an electric fan module according to one of the preceding claims, **characterised in that** it comprises a planetary or epicyclic reduction gearbox (56), the members of which are connected to a casing (26) of the turbomachine, to a shaft of the low-pressure body (44), and to a drive shaft (54) of the hub of the fan (12).

11. A method of disassembling and assembling/reassembling at least one vane (13) of an electric fan module (11) according to claim 9 taken in combination with claims 5 and 6, **characterised in that** it comprises:
- a disassembly step (D) comprising at least:
• a first sub-step (SET1) during which the fan cone (126), the inner annular lock (120), and at least one part of the sectorised annular covering wall (122) of the fan hub (70) are disassembled to free at least one root (112) of said at least one vane (13),
• a second sub-step (SET2) during which at least one part of the sectorised acoustic panel (110) facing said at least one vane (13) is disassembled,
• a third sub-step (SET3) during which the outer annular lock (104) is disassembled,
• a fourth sub-step (SET4) during which the annular flange (92) is axially extracted,
• a fifth sub-step (SET5) during which at least one upstream half-ring (80a) facing said at least one vane (13) is axially extracted,
• a sixth sub-step (SET6) during which the root (112) of said at least one vane (13) is axially extracted from the hub (70).
- an assembly/reassembly step (MRM) comprising the sub-steps of the disassembly step, taken in reverse order.
